# EUROPEAN PATENT APPLICATION

(11) **EP 2 546 111 A1**
(43) Date of publication of application: **16.01.2013**
(21) Application number: 12165074.1
(22) Date of filing: 20.04.2012
(51) Int. Cl.: B60R 21/207, B60R 21/231

(54) **Head Airbag**

(30) Priority: 12.07.2011 US 201161506694 P; 23.03.2012 US 201213428141
(71) Applicant: Zodiac Aerospace, 36100 Issoudun (FR)
(72) Inventor: Islam, Rakibul, Rancho Cucamonga, CA California 91730 (US); Quatanenes, Frederic, 36100 Issoudun (FR); Trimble, Robert W., Gainsville, TX Texas 76240 (US); Cailleteau, Jeremy, 36120 St. Aout (FR); Gaudin, Jeremy, 36250 Saint-Maur (FR); Martinez, Virgile, 36100 Segry (FR); Obadia, Jean-Marc, 38300 Maubec (FR); Aguirre, Raul Daniel Flores, CP31238 Chihuahua Chihuahua (MX)
(74) Representative: Phillips & Leigh

(57) **Abstract**

Disclosed is an airbag (10) comprising a bonnet (12) that is configured to deploy in a forward manner from a seat backrest (18) to surround a portion of an occupant of the seat; the airbag may have a bonnet hood (12) and a lower support portion (14).

## Description

### FIELD OF THE INVENTION

The present invention relates generally to airbags for use in passenger transport vehicles. The airbags are designed to safely interrupt a passenger's forward momentum in the event of a crash condition.

### BACKGROUND

Airbags are occupant restraining devices, which typically include a flexible envelope or "bag" that is designed to inflate rapidly during a collision in order to prevent the vehicle's occupants from striking interior objects located in front of (or, in some cases, on the side of) the occupant. In automobiles, airbags are designed to prevent occupants from striking the steering wheel, the vehicle door, a window, or any other interior objects. In aircraft, airbags are designed to prevent passengers from striking the seat in front each passenger, the tray tables, a window, or any other interior objects. Airbags on passenger rail cars (such as trains, monorails, trolleys), motorcycles, and other passenger transport vehicles work similarly.

Most modem vehicles contain multiple airbags. For example, most automobiles provide an airbag in front of each occupant seating position (at least in the front seat), to protect the head and torso. They may also contain knee airbags, which protect the occupant's knees and legs. Most aircraft provide airbags either positioned in the back of each seat (so as to deploy for the passenger sitting behind that seat) or in the seat belts. For example, passengers sitting in the front seat or bulkhead in the aircraft do not have a seat in front of them, so in this instance, the airbag may be positioned in the passenger seat belt. Passenger vehicles may also contain airbags in side locations, which can inflate between an occupant and the vehicle door or the vehicle window or wall.

Typically, sensors deploy one or more airbags in an impact zone at variable rates based on the type and severity of impact. Most airbags are designed to only inflate in moderate to severe frontal crashes. Airbags are normally designed with the intention of supplementing the protection of an occupant who is correctly restrained with a seatbelt.

Since their invention in the early 1950's and introduction in the mid-1970's, airbags have continually been improved upon. However, further airbag improvements are desirable, including airbags that have varying designs for varying types of seating arrangements in passenger vehicles.

### BRIEF SUMMARY

Examples of the invention described herein thus provide airbags designed to deploy from a back of a seat in a forward manner in order to envelope at least an upper portion of a vehicle occupant's torso.

### STATEMENT OF INVENTION

A seat equipped with an airbag, an airbag to deploy in a forward manner from a seat back and a method for installing an airbag in a seat in accordance with the present invention are set forth in the appended claims.

### BRIEF DESCRIPTION OF THE DRAWINGS

FIG. 1 shows a side perspective view of one embodiment of a bonnet airbag in its deployed position.

FIG. 2 shows a side perspective view of a bonnet airbag with an additional support feature.

FIG. 3 shows a side perspective view of a bonnet airbag with an alternate additional support feature.

FIG. 4 shows an aircraft seat with a bonnet airbag installed thereon.

FIG. 5 shows a cross sectional view of one embodiment of a storage position of a bonnet airbag.

FIGS. 6-9 show one embodiment of the progression of deployment of a bonnet airbag.

### DETAILED DESCRIPTION

Rather than causing an airbag to deploy from a location in front of or on the side of a passenger, the examples described herein provide an airbag that is designed to deploy from behind a passenger and extend over at least a portion of the passenger's upper body. For example, passengers seated in a front seat or bulkhead of an aircraft do not have a seat positioned in front of them from which an airbag may be deployed. Accordingly, the airbags for these seats are typically positioned in the passenger seat belt. However, seat belt airbags have several problems, in that they are uncomfortable for the passenger due to the increased weight of the seat belt and the stiffness of the belt. They can also make handling and positioning the seat belt more difficult. There may also be other instances when an airbag that deploys from a behind a passenger to the forward condition may be useful.

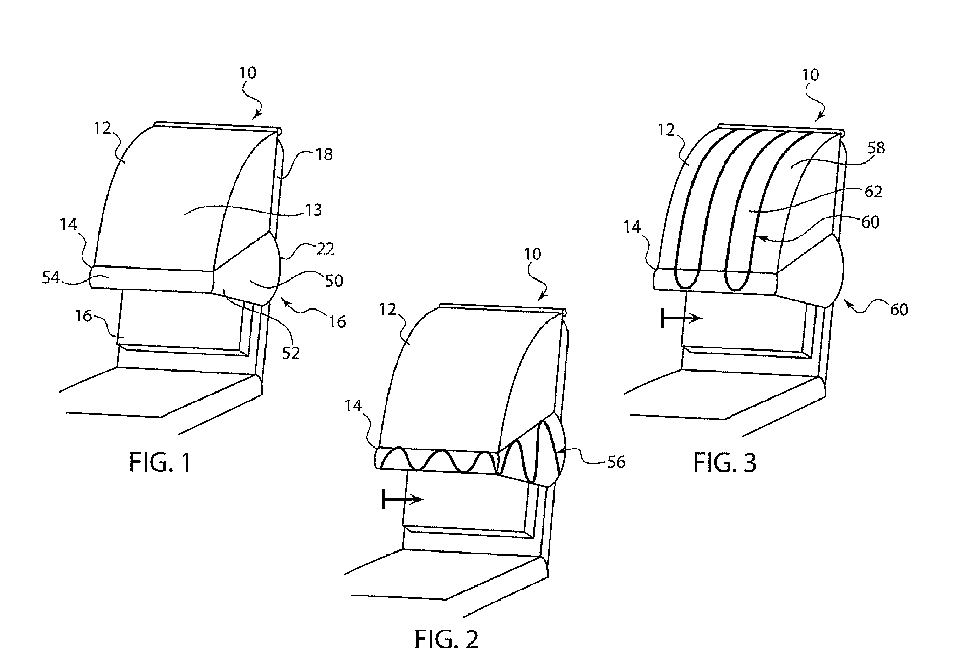

Accordingly, examples of the present invention provide a bonnet airbag having a bonnet hood that is associated with a seat back. The airbag deploys from behind the seat and moves forward to enclose or envelope at least an upper portion of the seat occupant's body within the bonnet airbag. Various examples of the bonnet airbag are illustrated in Figures 1-3.

Various bonnet airbags 10 are shown in Figures 1-3 in their deployed positions. The airbags 10 have a curved hood 12 and a lower support section 14. The bonnet airbags 10 are designed to deploy in a forward manner from a back portion of a seat. The lower support section 14 is generally provided as an inflatable flange 14, but it should be understood that any appropriate support section may be used, as long as it is capable of deploying immediately upon a detected crash condition and supporting the curved hood 12. Lower support section 14 will typically inflate, as this is the currently-known fastest and safest way to quickly deploy, but it should be understood that other options may be used for deployment of flange 14, such as a foam flange, or any other options that may be developed in the future.

The airbag 10 is secured to a seat 16 having a backrest 18. In a specific embodiment, the seat 16 is designed as an aircraft seat, but it should be understood that seat 16 may be any seat that is designed for use on board a passenger transport vehicle, such as an automobile seat, a train seat, or any other appropriate occupant seat in a vehicle. Each side of the bonnet airbag 10 is secured to the seat 16 along a middle area 20 of the backrest via one or more seat securement portions 22. It should be understood that bonnet airbag 10 may be positioned anywhere along the seat back, such as at the lower part of the seat back, at the upper part of the seat back, or even on or within a back part of the headrest, if one is provided on the seat back.

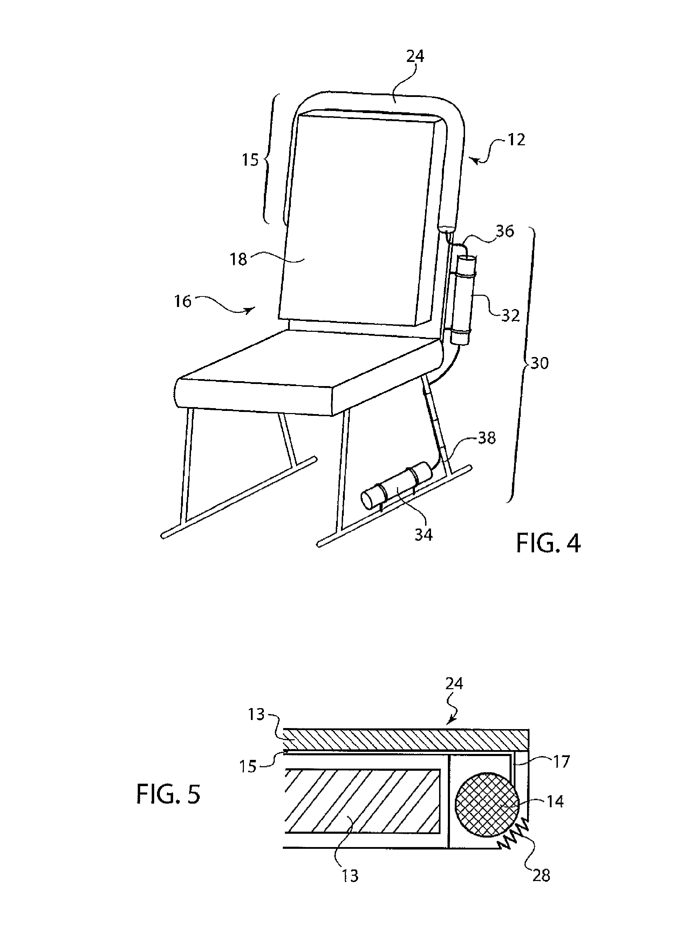

The curved hood 12 may be formed of a fabric 13 that is designed to form a bonnet or a curved bonnet when deployed. As shown in Figures 4 and 5, in a specific embodiment, the fabric 13 of the hood 12 has side edges 15 that are attached to the seat backrest 18 and a lower free end 17 that is secured to the inflatable flange 14. The inflatable flange 14 may also have edges that are secured to the seat back 18. In one embodiment, the bonnet airbag 10 is secured to the seat 16 such that it is stored around the backrest foam 13, inside a cover 24. An example of this storage position is shown in Figure 4, and a cross-sectional view of the components positioned inside the cover is shown in Figure 5. The airbag 10 may be secured at sides of the backrest and optionally, along the top of the back rest as well. In normal use (when not deployed), the airbag stays confined in this storage position. The cover 24 may formed of a coverage fabric that is designed to conceal the airbag 10 until use. Coverage fabric may be of a similar fabric and design as that of the seat back, so as to conceal the airbag 10 until use. The cover 24 may also feature a breakable seam 28, which is designed to break and allow quick and unencumbered employment of the airbag 10 in a crash condition.

The inflatable flange 14 is configured to inflate upon detection of a crash condition, such that it expands and creates a lower support section for hood 12. In a particular embodiment, the inflatable flange 14 expands and springs or shoots upwardly and the forwardly. The embodiment that provides the airbag 10 attached at or along about the middle portion 20 of the seat 16 allows the inflatable flange 14 to extend over and around the upper portion of the passenger's torso. In certain examples, the bonnet may be designed to be of such a size and shape that allows it extend over a middle portion of the passenger's torso as well. Upon deployment, inflation of the flange 14 causes the bonnet hood 12 to move from its stowed position, and the inflatable flange 14 surrounds a passenger or seat occupant at or about the portions of the torso. The bonnet hood 12 then envelopes an upper part of the passenger and creates a barrier to forward movement.

In a specific embodiment, the flange 14 may have a triangular or cone shape 50 at its fixation/seat securement area 22, which narrows to a narrower section 52 slightly forward thereof. This shape helps stabilize the bonnet when it is in the deployed position. The front portion 54 may be generally straight, as shown in the Figures, or it may be curved, angled, or shaped otherwise.

In the embodiment shown in Figure 2, the airbag 10 has an additional support feature 56. Support feature 56 may be a braid (such as a knitted or woven braid) that retracts or becomes shorter when the flange 14 inflates. By retracting upon inflation, the braid creates a slight tension on the flange 14 and thus, the airbag 10 as a whole. This reinforcing material may be added over the tube that forms the flange, inside the tube that forms the flange, or it may be formed integrally with the material that forms the flange. By retracting upon inflation, the braid creates a slight tension on the flange 14 and thus, the airbag 10 as a whole. This reinforcing material may be added over the tube that forms the flange, inside the tube that forms the flange, or it may be formed integrally with the material that forms the flange.

In the embodiment shown in Figure 3, the curved portion 58 of the hood 12 has an additional support feature 60. Support feature 60 may be one or more elongated inflatable tubes, one or more shape memory wires, or any other appropriate support feature. Support feature 60 may be provided in order to help the hood fully and quickly deploy. If support feature 60 is provided as one or more inflatable tubes 62, the tubes may be rounded and their deployment helps the airbag create a better surround for the passenger. The tubes 62 may be secured to the fabric 13 that forms the hood 12. The tubes 62 may be fluidly connected to flange 14 or they may be provided as separately inflatable entities.

Each seat includes a system 30 designed to deploy the airbag when needed, at the appropriate time. In one particular embodiment, a gas inflator 32 and a crash sensor 34 are mounted on or otherwise associated with the seat 16. For example, these elements may be positioned on the side portion of the seat, as shown in Figure 4, or they may be positioned underneath the seat, or they may be incorporated into other portions of the seat. The gas inflator 32 contains gas under high pressure that is restrained with a valve. The crash sensor 34 is equipped with an accelerometer sensor that is designed to detect a crash condition. The gas inflator 32 and the inflatable flange 14 are fluidly linked via a hollow tube 36. The gas inflator 32 and the crash sensor 34 are linked via electric wiring 38, although it should be understood that wireless communication may be used.

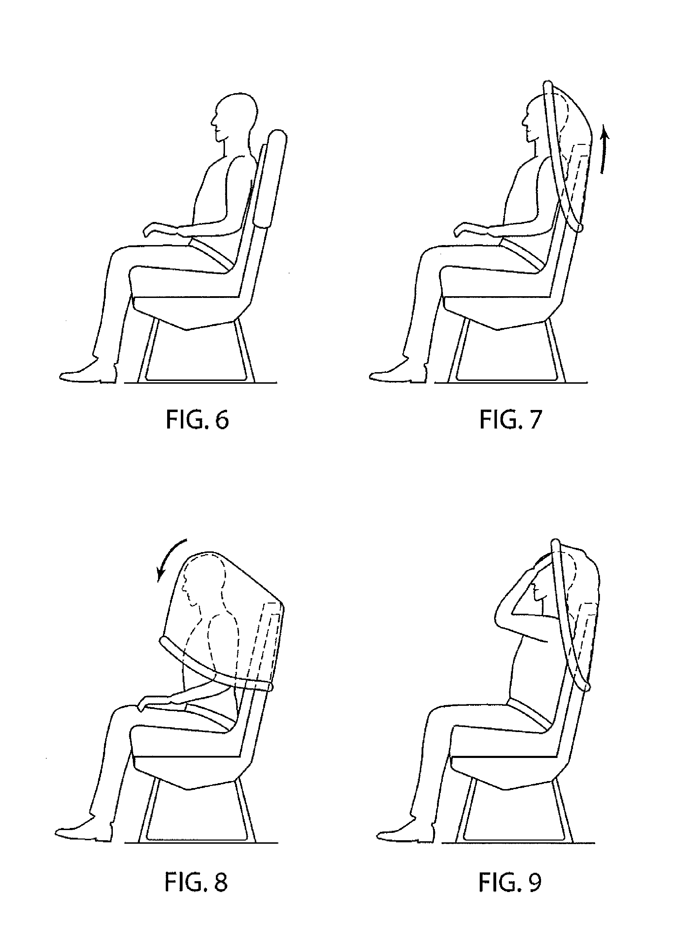

In normal use, the airbag 10 maintains its stored position, as shown in Figures 4 and 6. When a crash condition occurs, the crash sensor 34 detects an abnormal acceleration and sends a signal to the gas inflator 32 with the electric wiring 38 to open the valve. The gas flows on the hollow tube 36 from the gas inflator 32 to the inflatable flange 14. The inflatable flange 14 inflates by expanding out of the coverage fabric of the cover 24 by breaking the breakable seam 28. The flange 14 is then first deployed upward, as shown in Figure 7. In a specific embodiment, the airbag moves from its stowage position to its deployed position in about 20-40 milliseconds. After moving above the passenger, the flange then deploys in a downward direction in order to pass over the passenger, as shown in Figure 8. The curved bonnet hood 12, which is attached to the flange 14, follows the flange 14 and envelops at least an upper portion of the passenger to prevent impact. A passenger having a bonnet airbag 10 completely deployed over an upper torso area in illustrated in Figure 8. After the crash, the passenger lifts the airbag 10 and evacuates the vehicle. An example of this configuration is shown in Figure 9.

Changes and modifications, additions and deletions may be made to the structures and methods recited above and shown in the drawings without departing from the scope of the invention and the following claims.

## Claims

1. A seat equipped with an airbag (10) comprising:
a seat backrest (18) ;
an airbag (10) associated with the seat backrest;
**characterized in that**:
the airbag (10) is a bonnet (12) shaped and configured such that, upon deployment, the bonnet airbag moves forward to at least partially surround a portion of an occupant of the seat (16).

2. The seat of claim 1, wherein the bonnet airbag (10) comprises a bonnet hood (12) and a lower support portion (14).

3. The seat of claim 2, wherein the lower support portion comprises an inflatable flange (14).

4. The seat of any of claims 1 to 3, wherein the bonnet airbag (10) has a stowed position provided by a cover (24).

5. The seat of claim 4, wherein the cover (24) further comprises a breakable seam (28).

6. The seat of any of claims 1 to 5, wherein the bonnet airbag (10) is attached along sides of the seat backrest (18).

7. The seat of any of claims 1 to 6, wherein the bonnet airbag (10) has a triangular cone shape (50) at or near a point (22) at which the airbag (10) is attached to the seat backrest (18).

8. The seat of any of claims 1 to 7, further comprising a system (30) for detecting a crash condition and causing the airbag (10) to deploy.

9. The seat of claim 8, wherein the system (30) comprises a gas inflator (32) and a crash sensor (34).

10. The seat of any of claims 1 to 9, wherein the airbag (10) has one or more additional support features (56, 60).

11. The seat of claim 10, wherein the one or more additional support features comprise:
a braid (56) at the flange portion (14) of the airbag (10) that is configured to retract upon airbag deployment;
and/or,
one or more inflatable tubes (62) configured to support a hood portion (58) of the airbag upon airbag deployment.

12. An airbag designed to equip a seat (16) as claimed in any of claims 1 to 11.

13. A method for installing an airbag in a seat in order for the airbag to deploy forwards from a back portion of the seat, comprising:
(a) providing an airbag (10) as claimed in claim 12;
(b) providing a system (30) as specified in claim 8 or claim 9;
(c) securing the airbag (10) to the seat (16);
(d) securing the system (30) at a location that enables it to communicate with and activate the airbag (10) upon a crash condition.
